(19) Europäisches Patentamt
European Patent Office
Office européen des brevets

(11) **EP 4 491 671 A1**

(12) **EUROPEAN PATENT APPLICATION**
published in accordance with Art. 153(4) EPC

(43) Date of publication:
**15.01.2025 Bulletin 2025/03**

(21) Application number: **23766722.5**

(22) Date of filing: **03.03.2023**

(51) International Patent Classification (IPC):
**C08L 75/04** *(2006.01)*   **B32B 27/40** *(2006.01)*
**C08F 297/02** *(2006.01)*   **C08L 53/00** *(2006.01)*

(52) Cooperative Patent Classification (CPC):
**B32B 27/40; C08F 297/02; C08L 53/00;
C08L 75/04**

(86) International application number:
**PCT/JP2023/007964**

(87) International publication number:
**WO 2023/171546 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2022 JP 2022037063**

(71) Applicant: **Kuraray Co., Ltd.**
**Kurashiki-shi, Okayama 710-0801 (JP)**

(72) Inventors:
• **KAWAHARA, Moe**
**Tsukuba-shi, Ibaraki 305-0841 (JP)**
• **OKUMURA, Nao**
**Tsukuba-shi, Ibaraki 305-0841 (JP)**
• **ONO, Tomohiro**
**Tokyo 100-0004 (JP)**

(74) Representative: **Müller-Boré & Partner**
**Patentanwälte PartG mbB**
**Friedenheimer Brücke 21**
**80639 München (DE)**

(54) **THERMOPLASTIC RESIN COMPOSITION, MOLDED ARTICLE, AND LAMINATED STRUCTURE**

(57)    Provided are: a thermoplastic resin composition containing a thermoplastic polyurethane having improved toughness and melt tension without significantly compromising excellent properties of the thermoplastic polyurethane such as tensile strength at break, tensile strain at break and abrasion resistance; a molded article prepared from the thermoplastic resin composition; and a laminated structure prepared from the thermoplastic resin composition. A thermoplastic resin composition containing: a thermoplastic polyurethane (A); and an acrylic block copolymer (B) that contains an acrylic acid ester polymer block (b1) and a methacrylic acid ester polymer block (b2), wherein a content of the thermoplastic polyurethane (A) with respect to 100 parts by mass of the total of the thermoplastic polyurethane (A) and the acrylic block copolymer (B) is more than 75 parts by mass and 99 parts by mass or less.

EP 4 491 671 A1

**Description**

Technical Field

The present invention relates to a thermoplastic resin composition, a molded article, and a laminated structure.

Background Art

Thermoplastic polyurethane is excellent in moldability, and is used in a wide range of fields by virtue of its excellent strength, flexibility, elastic recovery and abrasion resistance, for example. For example, molded articles such as films, sheets, belts, hoses, and tubes, which are manufactured by extrusion molding, and molded articles having various shapes, which are obtained by injection molding, are expanding their use owing to their excellent properties.

Thermoplastic polyurethane is required to have further excellent toughness in some cases without significantly compromising these excellent properties. As a means for imparting toughness, a method of adding an acrylic soft resin component to thermoplastic polyurethane is conceivable. As one example of the acrylic soft resin, there is an acrylic block copolymer.

As a thermoplastic resin composition containing the thermoplastic polyurethane and an acrylic block copolymer, for example, Patent Literature 1 studies a thermoplastic resin composition containing 1 to 60% by weight of a specific acrylic block copolymer and 99 to 40% by weight of a specific thermoplastic polyurethane resin.

Citation List

Patent Literature

Patent Literature 1: WO 2009/004939 A

Summary of Invention

Technical Problem

As for the thermoplastic resin composition disclosed in Patent Literature 1, a thermoplastic resin composition containing a relatively large amount of an acrylic block copolymer has been specifically studied, and in the case of such a thermoplastic resin composition, there have been cases where the excellent properties of the thermoplastic polyurethane are significantly compromised and cases where no improvement in toughness is noticed.

The present invention has been made in view of the above circumstances, and an object of the present invention is to provide a thermoplastic resin composition containing a thermoplastic polyurethane having improved toughness and melt tension without significantly compromising excellent properties of the thermoplastic polyurethane, such as tensile strength at break, tensile strain at break and abrasion resistance, a molded article prepared from the thermoplastic resin composition, and a laminated structure prepared from the thermoplastic resin composition.

Solution to Problem

The main points of the present invention are the following items [1] to [10].

[1] A thermoplastic resin composition containing a thermoplastic polyurethane (A) and an acrylic block copolymer (B) that contains an acrylic acid ester polymer block (b1) and a methacrylic acid ester polymer block (b2),
wherein the content of the thermoplastic polyurethane (A) is more than 75 parts by mass and 99 parts by mass or less with respect to 100 parts by mass of the total of the thermoplastic polyurethane (A) and the acrylic block copolymer (B).
[2] The thermoplastic resin composition according to [1], wherein a ratio $\eta_B/\eta_A$ of a melt viscosity $\eta_B$ of the acrylic block copolymer (B) to a melt viscosity $\eta_A$ of the thermoplastic polyurethane (A) determined by melt viscosity measurement (at measurement temperature of 210°C, shear rate of 121.6 sec$^{-1}$) defined in JIS K 7199:1999 is within a range from 0.10 to 10.
[3] The thermoplastic resin composition according to [1] or [2],

wherein a polymer diol used as a raw material of the thermoplastic polyurethane (A) contains
at least one selected from the group consisting of a polyester diol and a polyether diol.

[4] The thermoplastic resin composition according to any one of [1] to [3], wherein the acrylic block copolymer (B) has a peak top molecular weight within a range of 40,000 or more and 300,000 or less.

[5] The thermoplastic resin composition according to any one of [1] to [4], wherein the acrylic block copolymer (B) is a triblock copolymer in which the methacrylic acid ester polymer block (b2) is bonded to each end of the acrylic acid ester polymer block (b1).

[6] The thermoplastic resin composition according to any one of [1] to [5], wherein the content of the methacrylic acid ester polymer block (b2) in the acrylic block copolymer (B) is within a range from 1 to 52% by mass.

[7] The thermoplastic resin composition according to any one of [1] to [6], wherein the acrylic acid ester polymer block (b1) contains 1% by mass or more and 100% by mass or less of a structural unit derived from the acrylic acid ester (b1-1) having an organic group with 1 to 3 carbon atoms.

[8] The thermoplastic resin composition according to [7], wherein the acrylic acid ester (b1-1) is methyl acrylate.

[9] A molded article including the thermoplastic resin composition according to any one of [1] to [8].

[10] A laminated structure including a layer formed of the thermoplastic resin composition according to any one of [1] to [8] and a layer formed of another material other than the thermoplastic resin composition.

Advantageous Effects of Invention

According to the present invention, it is possible to provide: a thermoplastic resin composition containing a thermoplastic polyurethane having improved toughness and melt tension, without significantly compromising excellent properties of the thermoplastic polyurethane, such as tensile strength at break, tensile strain at break, and abrasion resistance; a molded article prepared from the thermoplastic resin composition; and a laminated structure prepared from the thermoplastic resin composition.

Description of Embodiments

As used herein, the term "(meth)acrylic acid ester" means "methacrylic acid ester" or "acrylic acid ester", and "(meth)acrylic" means "methacrylic" or "acrylic".

[Thermoplastic resin composition]

The thermoplastic resin composition of the present invention contains a thermoplastic polyurethane (A) and an acrylic block copolymer (B) that contains an acrylic acid ester polymer block (b1) and a methacrylic acid ester polymer block (b2),and

is characterized by the content of the thermoplastic polyurethane (A) being more than 75 parts by mass and 99 parts by mass or less with respect to 100 parts by mass of the total of the thermoplastic polyurethane (A) and the acrylic block copolymer (B).

<Thermoplastic polyurethane (A)>

The thermoplastic polyurethane (A) is a polymer obtained by a reaction of a polymer diol, an organic diisocyanate, and a chain extender. In terms of improving the mechanical properties, heat resistance, cold resistance, elastic recovery, for example, of the resulting thermoplastic resin composition, the number average molecular weight of the polymer diol, which is a raw material of the thermoplastic polyurethane (A), is preferably within a range from 1,000 to 6,000. Here, the number average molecular weight of the polymer diol used as a raw material of the thermoplastic polyurethane (A) is a number average molecular weight calculated based on a hydroxyl number measured by SITE in accordance with JIS K1557.

Examples of the polymer diol as a raw material of the thermoplastic polyurethane (A) include polyester diol, polyether diol, polyester ether diol, polycarbonate diol, and polyester polycarbonate diol.

Examples of the polyester diol include a polyester diol obtained by a reaction of at least one dicarboxylic acid selected from the group consisting of aliphatic dicarboxylic acids, aromatic dicarboxylic acids, and ester-forming derivatives thereof with a low molecular weight diol, and a polyester diol obtained by ring-opening polymerization of a lactone.

More specifically, examples of the polyester diol include polycaprolactone diols, polyvalerolactone diols and polyester diols obtained by polycondensation reaction of one or two or more of aliphatic dicarboxylic acids having 6 to 12 carbon atoms, such as glutaric acid, adipic acid, pimelic acid, suberic acid, azelaic acid, sebacic acid, and dodecanedioic acid; aromatic dicarboxylic acids, such as terephthalic acid, isophthalic acid, and orthophthalic acid; and ester-forming derivatives thereof;

with one or two or more aliphatic diols having 2 to 10 carbon atoms, such as ethylene glycol, propylene glycol, 1,4-butanediol, 1,5-pentanediol, 1,6-hexanediol, 1,9-nonanediol, 3-methyl-1,5-pentanediol, and 2-methyl-1,8-octanediol.

Examples of the polyether diol include polyethylene glycol, polypropylene glycol, and polytetramethylene glycol.

Examples of the polycarbonate diol include polycarbonate diols obtained by reacting one or two or more aliphatic diols such as 1,4-butanediol, 1,5-pentanediol, 1,6-hexanediol and 1,8-octanediol with phosgene or a carbonate ester such as diphenyl carbonate or alkyl carbonate.

Among these polymer diols, polyester diols and polyether diols are preferable, and polyester diols are more preferable in terms of high compatibility with the acrylic block copolymer (B) and excellent mechanical properties of the resulting thermoplastic resin composition.

One type of these polymer diols may be used singly or two or more types thereof may be used in combination.

The type of organic diisocyanate as a raw material of the thermoplastic polyurethane (A) is not particularly limited as long as it can be used as a raw material of the thermoplastic polyurethane (A). Among the organic diisocyanates, aromatic diisocyanates, alicyclic diisocyanates, and aliphatic diisocyanates, each having a molecular weight of 500 or less, are preferable.

Examples of such organic diisocyanate include 4,4'-diphenylmethane diisocyanate, toluene diisocyanate, p-phenylene diisocyanate, xylylene diisocyanate, naphthalene diisocyanate, hydrogenated 4,4'-diphenylmethane diisocyanate (4,4'-dicyclohexylmethane diisocyanate), isophorone diisocyanate, and hexamethylene diisocyanate. Among these organic diisocyanates, 4,4'-diphenylmethane diisocyanate is preferable.

One type of these organic diisocyanates may be used singly or two or more types thereof may be used in combination.

The chain extender as a raw material of the thermoplastic polyurethane (A) is not particularly limited as long as it is a chain extender which is used in the production of the thermoplastic polyurethane. Among the chain extenders, aliphatic diols, alicyclic diols and aromatic diols are preferred.

Examples of such chain extenders include diols, including as aliphatic diols having 2 to 6 carbon atoms, such as ethylene glycol, diethylene glycol, 1,4-butanediol, 1,5-pentanediol, 2-methyl-1,3-propanediol, and 1,6-hexanediol; aliphatic diols having 7 or more carbon atoms, such as neopentyl glycol and 1,9-nonanediol; and diols other than aliphatic diols, such as cyclohexanediol and 1,4-bis($\beta$-hydroxyethoxy) benzene. Among these chain extenders, an aliphatic diol having 2 to 6 carbon atoms is preferable, and 1,4 butanediol is more preferable.

One type of chain extenders may be used singly or two or more types thereof may be used in combination.

The thermoplastic polyurethane (A) is preferably a thermoplastic polyurethane (A) obtained by reacting a polymer diol, a chain extender, and an organic diisocyanate within the range of polymer diol:chain extender = 1:0.2-8 (ratio by mole) and within the range of [total amount by moles of polymer diol and chain extender]:[amount by mole of organic diisocyanate] = 1:0.98-1.04. The thermoplastic resin composition that contains the thermoplastic polyurethane (A) obtained under such reaction conditions is such that the melt viscosity does not rapidly increase at melt molding such as extrusion molding and injection molding, and a product such as a molded article or a laminated structure can be smoothly produced when the product is produced from the thermoplastic resin composition, and the resulting thermoplastic resin composition and a product such as a molded article or a laminated structure each have an improved heat resistance.

The thermoplastic polyurethane (A) preferably has a hardness (Type A hardness; measurement at 25°C) within a range from 55 to 99 because products such as molded articles and laminated structures obtained from the thermoplastic resin composition have improved mechanical properties and moderate hardness. When the hardness of the thermoplastic resin composition tend to have excellent mechanical properties, and when the hardness of the thermoplastic polyurethane (A) is 55 or more, products such as molded articles and laminated structures obtained from the thermoplastic resin composition tend to have excellent mechanical properties, and when the hardness of the thermoplastic polyurethane (A) is 99 or less, products such as molded articles and laminated structures obtained from the thermoplastic resin composition tend to have excellent flexibility.

The hardness of the thermoplastic polyurethane (A) can be adjusted to a desired value, for example, by appropriately selecting types and amount ratios of a polymer diol, an organic diisocyanate, and a chain extender, which are used as raw materials.

The melt viscosity $\eta_A$ of the thermoplastic polyurethane (A) determined by melt viscosity measurement (at measurement temperature of 210°C, shear rate of 121.6 sec$^{-1}$) defined in JIS K 7199:1999 is preferably within a range from 100 to 5000, and more preferably within a range from 300 to 2000. When the melt viscosity of the thermoplastic polyurethane (A) is within the range set forth above, the resulting thermoplastic resin composition has an improved molding processability.

The aforementioned melt viscosity of the thermoplastic polyurethane (A) can be adjusted to a desired value by appropriately selecting, for example, types of a polymer diol, an organic diisocyanate, and a chain extender, and an amount ratio thereof, for example.

The method for producing the thermoplastic polyurethane (A) is not particularly limited, and for example, the thermoplastic polyurethane (A) can be produced by method such as prepolymer process or one-shot process through a known urethanization reaction using the above-described polymer diol, organic diisocyanate, chain extender, for example, as raw materials. A method for producing the thermoplastic polyurethane (A) is preferably a method in which melt

**EP 4 491 671 A1**

polymerization is carried out substantially in the absence of a solvent, and is more preferably a method in which continuous melt polymerization is carried out using a multi-screw extruder.

As the thermoplastic polyurethane (A), a commercially available thermoplastic polyurethane may be used. Examples of the commercially available product that can be used as the thermoplastic polyurethane (A) include "Kuramiron (registered trademark) U" (trade name) manufactured by Kuraray Co., Ltd., "Elastollan (registered trademark)" (trade name) manufactured by BASF Japan Ltd., "Miractran (registered trademark)" (trade name) manufactured by Nippon Miractran Company Limited, "Resamine (registered trademark) P" (trade name) manufactured by Dainichiseika Color & Chemicals Mfg. Co., Ltd., and "U-FINE (registered trademark) P" (trade name) manufactured by AGC Inc.

**<Acrylic block copolymer (B)>**

The acrylic block copolymer (B) includes one or more acrylic acid ester polymer blocks (b1) and one or more methacrylic acid ester polymer blocks (b2).

**[Acrylic acid ester polymer block (b1)]**

The acrylic acid ester polymer block (b1) contains a structural unit derived from an acrylic acid ester. Such acrylic acid esters are roughly classified into three groups: acrylic acid esters (hereinafter, referred to as acrylic acid ester (b1-1)) represented by the general formula $CH_2=CH-COOR^1$ (1) (in the formula (1), $R^1$ represents an organic group having 1 to 3 carbon atoms); acrylic acid esters (hereinafter, referred to as acrylic acid ester (b1-2)) represented by the general formula $CH_2=CH-COOR^2$ (2) (in the formula (2), $R^2$ represents an organic group having 4 to 12 carbon atoms); and other acrylic acid esters.

Examples of the organic group having 1 to 3 carbon atoms represented by $R^1$ in the acrylic acid ester (b1-1) include alkyl groups having 1 to 3 carbon atoms, such as a methyl group, an ethyl group, a n-propyl group and an isopropyl group; and organic groups each having the total number of carbon atoms ranging from 1 to 3 and containing an element other than carbon, for example, oxygen, such as a methoxyethyl group, a hydroxyethyl group, an aminoethyl group and a glycidyl group. Examples of the acrylic acid ester (b1-1) include acrylic acid esters having no functional group, such as methyl acrylate, ethyl acrylate, isopropyl acrylate, and n-propyl acrylate; and acrylic acid esters each having a functional group, such as 2-methoxyethyl acrylate, 2-hydroxyethyl acrylate, 2-aminoethyl acrylate, and glycidyl acrylate.

Among these acrylic acid esters (b1-1), an acrylic acid ester having no functional group is preferable, methyl acrylate and ethyl acrylate are more preferable, and methyl acrylate is still more preferable, because the resultant thermoplastic resin composition has an excellent outer appearance at high temperature molding.

These acrylic acid esters (b1-1) may be used singly or two or more types thereof may be used in combination.

Examples of the organic group having 4 to 12 carbon atoms represented by $R^2$ in the acrylic acid ester (b1-2) include alkyl groups each having 4 to 12 carbon atoms, such as a butyl group, an amyl group (pentyl group), a hexyl group, a cyclohexyl group, an ethylhexyl group, an octyl group, a decyl group, an isobornyl group and a lauryl group; aromatic ring groups each having 6 to 12 carbon atoms, such as a phenyl group and a benzyl group; and organic groups each having the total number of carbon atoms ranging from 4 to 12 and containing an element other than carbon, for example, oxygen, such as an ethoxyethyl group, a tetrahydrofurfuryl group, a diethylaminoethyl group and a phenoxyethyl group. Examples of the acrylic acid ester (b1-2) include acrylic acid esters having no functional group, such as n-butyl acrylate, isobutyl acrylate, sec-butyl acrylate, tert-butyl acrylate, amyl acrylate, isoamyl acrylate, n-hexyl acrylate, 2-ethylhexyl acrylate, n-octyl acrylate, isooctyl acrylate, decyl acrylate, isobornyl acrylate, lauryl acrylate, cyclohexyl acrylate, phenyl acrylate and benzyl acrylate; and acrylic acid esters each having a functional group, such as 2-ethoxyethyl acrylate, 2-(diethylamino) ethyl acrylate, tetrahydrofurfuryl acrylate and 2-phenoxyethyl acrylate.

Among these acrylic acid esters (b1-2), an acrylic acid ester having no functional group is preferable, an alkyl acrylate having an alkyl group with 4 to 12 carbon atoms is more preferable, and n-butyl acrylate and 2-ethylhexyl acrylate are still more preferable, in terms of clearer phase separation between the acrylic acid ester polymer block (b1) and the methacrylic acid ester polymer block (b2). Moreover, n-butyl acrylate is further preferable because the resulting thermoplastic resin composition is excellent in flexibility indicated by the tensile strain at break and in adhesiveness, also is excellent in durability.

These acrylic acid esters (b1-2) may be used singly or two or more types thereof may be used in combination.

Examples of the acrylic acid ester other than the acrylic acid ester (b1-1) and the acrylic acid ester (b1-2) include acrylic acid esters having no functional group, such as octadecyl acrylate.

The aforementioned acrylic acid ester may be used singly, or two or more types thereof may be used in combination. The content of the structural unit derived from the acrylic acid ester in the acrylic acid ester polymer block (b1) is preferably 60% by mass or more, more preferably 80% by mass or more, still more preferably 90% by mass or more, and one preferable embodiment is that the content is 100% by mass.

Among the aforementioned acrylic acid esters, the acrylic acid ester is preferably at least one selected from the acrylic acid esters (b1-1) and the acrylic acid esters (b1-2) in terms of exhibiting appropriate tensile strain at break and flexibility. Among the aforementioned acrylic acid esters, an acrylic acid ester having no functional group is also preferable on account of making it easier to improve the toughness of the resulting thermoplastic resin composition and making it easier to improve the outer appearance at high temperature molding.

From the point of view of high melt tension and excellent moldability of the resulting thermoplastic resin composition, one preferable embodiment is that the acrylic acid ester polymer block (b1) contains a structural unit derived from the acrylic acid ester (b1-1).

When the structural unit derived from the acrylic acid ester (b1-1) in the structural unit derived from the acrylic acid ester of the acrylic acid ester polymer block (b1) is contained, the content ratio of the structural unit derived from the acrylic acid ester (b1-1) is preferably 100% by mass or less, more preferably 90% by mass or less, still more preferably 85% by mass or less, particularly preferably 80% by mass or less, even more preferably 70% by mass or less, and may be 50% by mass or less. Moreover, the content is preferably 1% by mass or more, more preferably 10% by mass or more, further preferably 15% by mass or more, particularly preferably 20% by mass or more, even more preferably 30% by mass or more, and may be 50% by mass or more.

From the point of view of making it easy to impart flexibility to the resulting thermoplastic resin composition, one preferable embodiment is that the acrylic acid ester polymer block (b1) contains a structural unit derived from the acrylic acid ester (b1-2). From the point of view of making it easier to impart flexibility to the resulting thermoplastic resin composition, the content of the structural unit derived from the acrylic acid ester (b1-2) in the acrylic acid ester polymer block (b1) is preferably 60% by mass or more, more preferably 80% by mass or more, still more preferably 90% by mass or more, and one preferable embodiment is that the content is 100% by mass.

One preferable embodiment is that the acrylic acid ester that forms the structural unit derived from the acrylic acid ester contained in the acrylic acid ester polymer block (b1) contains two types selected from acrylic acid esters (b1-2), typically one type (for example, n-butyl acrylate) selected from acrylic acid esters (b1-2-1) having an organic group with 4 to 6 carbon atoms and one type (for example, 2-ethylhexyl acrylate) selected from acrylic acid esters (b1-2-2) having an organic group with 7 to 12 carbon atoms. In that case, the mass ratio (b1-2-1)/(b1-2-2) of the structural unit derived from an acrylic acid ester (b1-2-1) to the structural unit derived from an acrylic acid ester (b1-2-2) is preferably within a range from 90/10 to 10/90 and more preferably from 60/40 to 40/60.

When (b1-2-1)/(b1-2-2) is within the range set forth above, excellent cold resistance can be exhibited. Note that the mass ratio of the structural unit derived from the acrylic acid ester (b1-2-1) to the structural unit derived from the acrylic acid ester (b1-2-2) can be determined by $^1$H-NMR measurement.

As the combination of the acrylic acid ester (b1-2-1) and the acrylic acid ester (b1-2-2) used in the acrylic acid ester polymer block (b1), mention may be made of, for example, n-butyl acrylate/2-ethylhexyl acrylate. In this occasion, it is more preferable that the acrylic acid ester (b1-2-1) and the acrylic acid ester (b1-2-2) used are such that the difference in solubility parameter between the acrylic acid ester (b1-2-1) and the acrylic acid ester (b1-2-2) is within a range from 0.3 to 2.5 $(MPa)^{1/2}$. Note that such a solubility parameter can be calculated by the method described in "POLYMER HANDBOOK Forth Edition", VII pp. 675 to 714 (Wiley Interscience, Inc., published in 1999) and "Polymer Engineering and Science", 1974, Vol. 14, pp. 147 to 154.

From the point of view of further excellent balance between cold resistance and tensile strength of the resulting thermoplastic resin composition, one preferable embodiment is that the structural unit derived from the acrylic acid ester contained in the acrylic acid ester polymer block (b1) contains a structural unit derived from the acrylic acid ester (b1-1) represented by the general formula $CH_2=CH-COOR^1$ (1) (wherein $R^1$ represents an organic group having 1 to 3 carbon atoms.) and a structural unit derived from the acrylic acid ester (b1-2) represented by the general formula $CH_2=CH-COOR^2$ (2) (wherein $R^2$ represents an organic group having 4 to 12 carbon atoms.)

In this case, the mass ratio (b1-1)/(b1-2) of the structural unit derived from the acrylic acid ester (b1-1) to the structural unit derived from the acrylic acid ester (b1-2) in the acrylic acid ester polymer block (b1) is preferably within a range from 90/10 to 5/95. When the mass ratio is within the range set forth above, it is excellent at balancing between the tensile strength attributable to the structural unit derived from the acrylic acid ester (b1-1) and the cold resistance attributable to the structural unit derived from the acrylic acid ester (b1-2). From the point of view of further excellent balance between cold resistance and tensile strength, the mass ratio of the structural unit (b1-1)/(b1-2) is preferably within a range from 85/15 to 10/90, more preferably from 80/20 to 10/90, and still more preferably from 75/25 to 15/85. Note that the mass ratio of the structural unit derived from the acrylic acid ester (b1-1) to the structural unit derived from the acrylic acid ester (b1-2) can be determined by $^1$H-NMR measurement.

One preferred embodiment is that the structural unit derived from the acrylic acid ester contained in the acrylic acid ester polymer block (b1) consists only of the structural unit derived from the acrylic acid ester (b1-1) and the structural unit derived from the acrylic acid ester (b1-2).

When the acrylic acid ester polymer block (b1) is a copolymer that contains structural units derived from two or more types of acrylic acid esters, the acrylic acid ester polymer block (b1) may be formed of a random copolymer of these acrylic acid esters, may be formed of a block copolymer of these acrylic acid esters, or may be formed of a gradient copolymer of these acrylic acid esters, however, it is preferable that the acrylic acid ester polymer block (b1) is formed of typically a random copolymer of these acrylic acid esters. When the acrylic block copolymer (B) contains two or more acrylic acid ester polymer blocks (b1), the structures of the acrylic acid ester polymer blocks (b1) may be the same as or different from each other. Moreover, the total of the structural units derived from the acrylic acid esters (b1-1) and (b1-2) contained in the acrylic acid ester polymer block (b1) is preferably 60% by mass or more, more preferably 80% by mass or more, still more preferably 90% by mass or more in the acrylic acid ester polymer block (b1), and being 100% by mass is one preferable embodiment.

The acrylic block copolymer (B) may contain two or more acrylic acid ester polymer blocks (b1), and in that case, the acrylic acid ester polymer blocks (b1) may be the same as or different from each other.

The glass transition temperature of the acrylic acid ester polymer block (b1) is preferably within a range from - 100 to 30°C, more preferably within a range from -80 to 10°C, still more preferably within a range from -70 to 0°C, and particularly preferably within a range from -60 to -10°C. When the glass transition temperature is within this range, the thermoplastic resin composition of the present invention can have excellent mechanical properties at room temperature.

[Methacrylic acid ester polymer block (b2)]

The methacrylic acid ester polymer block (b2) contains a structural unit derived from a methacrylic acid ester. Examples of the methacrylic acid ester include methacrylic acid esters with no functional groups, such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate and benzyl methacrylate; and methacrylic acid esters with a functional group, such as methoxyethyl methacrylate, ethoxyethyl methacrylate, diethylaminoethyl methacrylate, 2-hydroxyethyl methacrylate, 2-aminoethyl methacrylate, glycidyl methacrylate and tetrahydrofurfuryl methacrylate.

Among them, in terms of excellent outer appearance of the resulting thermoplastic resin composition at high temperature molding, a methacrylate with no functional group is preferable, methyl methacrylate, ethyl methacrylate, tert-butyl methacrylate, cyclohexyl methacrylate, 2-ethylhexyl methacrylate, isobornyl methacrylate, phenyl methacrylate, and benzyl methacrylate are more preferable, and methyl methacrylate is still more preferable in terms of clearer phase separation between the acrylic acid ester polymer block (b1) and the methacrylic acid ester polymer block (b2) and improved mechanical properties of the thermoplastic resin composition. The methacrylic acid ester polymer block (b2) may be composed of one type or two or more types of these methacrylic acid esters. Moreover, it is preferable that the acrylic block copolymer (B) includes two or more methacrylic acid ester polymer blocks (b2) in terms of exhibiting excellent mechanical properties and molding processability. In that case, the methacrylic acid ester polymer blocks (b2) may be the same as or different from each other.

The peak top molecular weight (Mp) of the methacrylic acid ester polymer block (b2) is not particularly limited, but is preferably in the range from 1,000 to 50,000 and more preferably in the range from 2,000 to 30,000. When the Mp of the methacrylic acid ester polymer block (b2) is below this range, the cohesive force of the resulting acrylic block copolymer (B) is insufficient in some cases. In addition, when the Mp of the methacrylic acid ester polymer block (b2) is above this range, the melt viscosity of the resulting acrylic block copolymer (B) increases, and the productivity in the production of the thermoplastic resin composition decreases in some cases. The content of the structural unit derived from a methacrylic acid ester in the methacrylic acid ester polymer block (b2) is preferably 60% by mass or more, more preferably 80% by mass or more, still more preferably 90% by mass or more, and one preferable aspect is that the content is 100% by mass.

The glass transition temperature of the methacrylic acid ester polymer block (b2) is preferably within a range from 80 to 140°C, more preferably within a range from 90 to 130°C, and still more preferably within a range from 100 to 120°C. When the glass transition temperature is within this range, the methacrylic acid ester polymer block (b2) functions as a physical pseudo-crosslinking point at a normal service temperature of the thermoplastic resin composition, and is excellent in durability and heat resistance.

The acrylic acid ester polymer block (b1) may contain a structural unit derived from a methacrylic acid ester to the extent that the effect of the present invention is not compromised, and the methacrylic acid ester polymer block (b2) may contain a structural unit derived from an acrylic acid ester to the extent that the effect of the present invention is not compromised. In addition, a structural unit derived from another monomer other than the (meth)acrylic acid ester may be contained as needed. Examples of such other monomers include: vinyl monomers having a carboxyl group, such as (meth)acrylic acid, crotonic acid, maleic acid, and fumaric acid; aromatic vinyl monomers such as styrene, $\alpha$-methylstyrene, p-methylstyrene, and m-methylstyrene; conjugated diene monomers such as butadiene and isoprene; olefin monomers such as ethylene, propylene, isobutene and octene; lactone monomers such as $\varepsilon$-caprolactone and valerolactone; (meth)acrylamide, (meth)acrylonitrile, maleic anhydride, vinyl acetate, vinyl chloride and vinylidene chloride. When these monomers are used, they are used in an amount of preferably 40% by mass or less, more preferably 20% by mass or less, and still more preferably 10% by mass or less with respect to the total mass of the monomers used for each polymer block.

The acrylic block copolymer (B) used in the present invention may include another polymer block as necessary in addition to the acrylic acid ester polymer block (b1) and the methacrylic acid ester polymer block (b2). Examples of such other polymer blocks include: polymer blocks or copolymer blocks each containing a structural unit derived from a monomer such as styrene, $\alpha$-methylstyrene, p-methylstyrene, m-methylstyrene, acrylonitrile, methacrylonitrile, ethylene, propylene, isobutene, butadiene, isoprene, octene, vinyl acetate, maleic anhydride, vinyl chloride or vinylidene chloride; and polymer blocks formed of polyethylene terephthalate, polylactic acid, polyurethane or polydimethylsiloxane. In addition, the abovementioned polymer block also includes a hydrogenated product of a polymer block containing a structural unit derived from a conjugated diene such as butadiene or isoprene.

When an acrylic acid ester polymer block (b1) is denoted by b1, a polymer block (b1) having a structure different from that of the polymer block (b1) (provided that the polymer block (b2) is excluded) is denoted by b1', and a methacrylic acid ester polymer block (b2) is denoted by b2, the acrylic block copolymer (B) is preferably represented by a general formula:

$$(b2-b1)_n$$

$$(b2-b1)_n-b2$$

$$b1-(b2-b1)_n$$

$$(b2-b1)_n-b1'$$

$$(b2-b1)_n-Z,$$

or

$$(b1-b2)_n-Z$$

(wherein, n represents an integer ranging from 1 to 30, Z denotes a coupling site (a coupling site after the coupling agent has reacted with a polymer terminal to form a chemical bond, and "-" denotes a bond of each polymer block.) Note that, when a plurality of b1 and b2 are included in the formula, they may be polymer blocks having the same structure or polymer blocks having different structures.) Here, the "different structures" means structures different from each other in at least one of a monomer unit constituting a polymer block, a molecular weight, a molecular weight distribution and a stereoregularity, and, when multiple monomer units are included, structures different from each other in at least one of a ratio of each monomer unit and a formation of copolymerization (random, gradient, or block). The value of n is preferably within a range from 1 to 15, more preferably from 1 to 8, and still more preferably from 1 to 4. Among the aforementioned structures, a linear block copolymers represented by $(b2-b1)_n$, $(b2-b1)_n-b2$, $b1-(b2-b1)_n$, and $(b2-b1)_n-b1'$ are preferable from the point of view of excellent durability of the thermoplastic resin composition, and more preferable are a diblock copolymer represented by b2-b1, and a triblock copolymer represented by formula: b2-b1-b2 (the methacrylic acid ester polymer block (b2) is bonded to each end of the acrylic acid ester polymer block (b1).) having blocks in the order of the methacrylic acid ester polymer block (b2), the acrylic acid ester polymer block (b1), and the methacrylic acid ester polymer block (b2).

One type of the acrylic block copolymer (B) may be used singly, or two or more types thereof may be used in combination.

From the point of view of excellent moldability of the thermoplastic resin composition of the present invention, the peak top molecular weight (Mp) of the acrylic block copolymer (B) is preferably 40,000 or more and 300,000 or less. From the point of view of further excellent moldability, the Mw is more preferably 50,000 or more, still more preferably 60,000 or more, and more preferably 250,000 or less, still more preferably 200,000 or less.

The molecular weight distribution (Mw/Mn) of the acrylic block copolymer (B) is preferably within a range from 1.0 to 1.4. The Mw/Mn is more preferably within a range from 1.0 to 1.35, still more preferably from 1.0 to 1.3, and particularly preferably from 1.0 to 1.25 in terms of excellent moldability at the time when the thermoplastic resin composition is formed.

Note that the peak top molecular weight (Mp), the number average molecular weight (Mn), and the weight average molecular weight (Mw) of the acrylic block copolymer (B) are values determined in terms of standard polystyrene by gel permeation chromatography, and the molecular weight distribution (Mw/Mn) is a value calculated from the values of Mw and Mn.

From the point of view of excellent toughness of the thermoplastic resin composition, the content of the methacrylic acid ester polymer block (b2) in the acrylic block copolymer (B) is preferably within a range from 1 to 52% by mass, more preferably from 3 to 52% by mass, still more preferably from 5 to 51% by mass, and particularly preferably from 7 to 50% by mass.

From the same point of view as described above, the content of the acrylic acid ester polymer block (b1) in the acrylic block copolymer (B) used in the present invention is preferably within a range from 48 to 99% by mass, more preferably from 48 to 97% by mass, still more preferably from 49 to 95% by mass, and particularly preferably from 50 to 93% by mass.

The melt viscosity $\eta_B$ of the acrylic block copolymer (B), which is determined by melt viscosity measurement (at measurement temperature of 210°C, shear rate of 121.6 sec$^{-1}$) defined in JIS K 7199:1999, is preferably within a range from 50 to 2500 Pa · s, and more preferably within a range from 100 to 1500 Pa · s. When the melt viscosity of the acrylic block copolymer (B) is within the range set forth above, the resulting thermoplastic resin composition is excellent in mechanical properties.

The aforementioned melt viscosity of the acrylic block copolymer (B) can be adjusted to a desired value by appropriately selecting, for example, the weight average molecular weight of the acrylic block copolymer (B), the content of each polymer block and the types of monomers that form the polymer blocks, for example.

[Production method of acrylic block copolymer (B)]

The production method of the acrylic block copolymer (B) is not particularly limited as long as a polymer satisfying the above-described conditions can be obtained, and a method according to a known method can be employed. In general, as a method of obtaining a block copolymer having a narrow molecular weight distribution, there is adopted a method for living polymerization of monomers that form structural units. Examples of such living polymerization method include: a living polymerization method using an organic rare earth metal complex as a polymerization initiator (refer to JP H06-93060 A); a living anionic polymerization method using an organic alkali metal compound as a polymerization initiator in the presence of a mineral acid salt such as a salt of an alkali metal or of an alkaline earth metal (refer to JP H05-507737 A); a living anionic polymerization method using an organic alkali metal compound as a polymerization initiator in the presence of an organoaluminum compound (refer to JP H11-335432 A); and an atom transfer radical polymerization method (ATRP) (refer to Macromolecular Chemistry and Physics, 2000, Volume 201, pp. 1108-1114).

Among the production methods set forth above, the living anionic polymerization method using an organic alkali metal compound as a polymerization initiator in the presence of an organoaluminum compound in a solvent typified by hydrocarbon is preferable because the resulting block copolymer becomes highly transparent, the residual monomers is reduced thereby suppressing odor, and bubble generation can be suppressed when molding the thermoplastic resin composition. Moreover, this method is also preferable because the molecular structure of the methacrylic acid ester polymer block is highly syndiotactic, which is also preferable because there is an effect of enhancing the heat resistance of the thermoplastic resin composition. As the organoaluminum compound, for example, an organoaluminum compound described in JP 2019-157067 A, such as isobutylbis(2,6-di-t-butyl-4-methylphenoxy) aluminum can be used. As polymerization conditions, there can be employed polymerization conditions described in JP 2019-157067 A.

The acrylic block copolymer (B) can be produced, for example, by repeating desired number of steps to form a desired polymer block (methacrylic acid ester polymer block (b2), acrylic acid ester polymer block (b1), for example) at a desired living polymer terminus obtained by polymerizing monomers, followed by terminating the polymerization reaction. According to the method as described above, there can be produced a binary block (diblock) copolymer composed of a methacrylic acid ester polymer block (b2)-acrylic acid ester polymer block (b1); a ternary block (triblock) copolymer composed of methacrylic acid ester polymer block (b2)-acrylic acid ester polymer block (b1)-methacrylic acid ester polymer block (b2), or a ternary block (triblock) copolymer composed of methacrylic acid ester polymer block (b2)-acrylic acid ester polymer block (b1)-acrylic acid ester polymer block (b1'); a quaternary block copolymer composed of a methacrylic acid ester polymer block (b2)-acrylic acid ester polymer block (b1)-methacrylic acid ester polymer block (b2)-acrylic acid ester polymer block (b1), for example.

The thermoplastic resin composition of the present invention is preferably such that a ratio $\eta_B/\eta_A$ of a melt viscosity $\eta_B$ of the acrylic block copolymer (B) to a melt viscosity $\eta_A$ of the thermoplastic polyurethane (A) determined by melt viscosity measurement (at measurement temperature of 210°C, shear rate of 121.6 sec$^{-1}$) defined in JIS K 7199:1999 is within a range from 0.10 to 10. Note that the melt viscosity measurement defined in JIS K 7199:1999 is specifically a measurement carried out by the method described in Examples. The use of such a thermoplastic polyurethane (A) and an acrylic block copolymer (B) enables to form a thermoplastic resin composition having an improved toughness without significantly compromising the excellent properties of the thermoplastic polyurethane.

Details of the mechanism are unknown, but is presumed as follows.

As for the size of the dispersed phase in a system of two-component polymer mixture of an immiscible system as in the mixture of the thermoplastic polyurethane (A) and the acrylic block copolymer (B) used in the present invention (the thermoplastic resin composition of the present invention), Taylor has shown that the minimum dispersed particle size (D) in the dispersed phase placed in a steady shear flow field is defined by the balance among the interfacial tension ($\Gamma$) between the two components, the shear rate (S), and the viscosity ($\eta$), and has reported that it is formulated as in the formula (1) (for example, G.I.Taylor, Proc. R. Soc. London, A138,41 (1932), G.I.Taylor, Proc. R. Soc. London, A146,501 (1934)).

$$D = 4\Gamma(\eta_r + 1)/S\eta_m(19\eta_r/4 + 4) \quad (1)$$

In the formula (1) set forth above, $\eta_r$ is the viscosity ratio of the two-components in system, and $\eta_m$ is the viscosity of the matrix phase. Thereafter, the formula has applied to many immiscible polymer blends by Wu, and an improvement of the formula (1) has been made to reproduce the measured value of D, but the involved physical quantities remain basically unchanged (S. Wu, Polym. Eng. Sci., 27,335 (1987)).

It is presumed that this is because in the thermoplastic resin composition of the present invention when the aforementioned melt viscosity ratio $\eta_B/\eta_A$ is within a specific range, the dispersed phase mainly composed of the acrylic block copolymer (B) has an appropriate dispersion particle size for exhibiting physical properties and is dispersed in the matrix phase mainly composed of the acrylic block copolymer (B).

The ratio $\eta_B/\eta_A$ of the melt viscosity of the acrylic block copolymer (B) to the melt viscosity of the thermoplastic polyurethane (A) is more preferably within a range from 0.10 to 10.0, still more preferably within a range from 0.12 to 5.0 from the point of view of forming a thermoplastic resin composition having further improved toughness without significantly compromising the excellent properties of the thermoplastic polyurethane.

In the thermoplastic resin composition of the present invention, the content of the thermoplastic polyurethane (A) is more than 75 parts by mass and 99 parts by mass or less with respect to 100 parts by mass of the total of the thermoplastic polyurethane (A) and the acrylic block copolymer (B).

By using the thermoplastic polyurethane (A) within such a range, the resulting thermoplastic resin composition can be improved in toughness without significantly compromising the excellent properties of the thermoplastic polyurethane. From the point of view of further improving the toughness without significantly compromising the excellent properties of the thermoplastic polyurethane, the content of the thermoplastic polyurethane (A) with respect to 100 parts by mass of the total of the thermoplastic polyurethane (A) and the acrylic block copolymer (B) is preferably 77 parts by mass or more and 98 parts by mass or less, and more preferably 80 parts by mass or more and 95 parts by mass or less.

In the thermoplastic resin composition of the present invention, the content of the acrylic block copolymer (B) is usually 1 part by mass or more and less than 25 parts by mass with respect to 100 parts by mass of the total of the thermoplastic polyurethane (A) and the acrylic block copolymer (B).

By using the thermoplastic polyurethane (A) within such a range, the resulting thermoplastic resin composition can be improved in the properties derived from the acrylic block copolymer (B) without significantly compromising the excellent properties of the thermoplastic polyurethane. From the point of view of further improving the toughness without significantly compromising the excellent properties of the thermoplastic polyurethane, the content of the acrylic block copolymer (B) is preferably 2 parts by mass or more and 23 parts by mass or less, and more preferably 5 parts by mass or more and 20 parts by mass or less with respect to 100 parts by mass of the total of the thermoplastic polyurethane (A) and the acrylic block copolymer (B).

(Other optional components)

The thermoplastic resin composition of the present invention may contain an inorganic filler, an antioxidant, another thermoplastic polymer, a softener, a tackifier resin, a lubricant, a light stabilizer, a processing aid, a colorant such as a pigment or a dye, a flame retardant, an antistatic agent, a matting agent, a silicone oil, an antiblocking agent, an ultraviolet absorber, a release agent, a foaming agent, an antibacterial agent, an antiviral agent, an antifungal agent, a fragrance, for example, as necessary to the extent that the effects of the present invention is not impeded. One type of these other optional components may be used singly, or two or more types thereof may be used in combination.

<Inorganic filler>

The inorganic filler can be contained for the purpose of improving physical properties such as weather resistance of the thermoplastic resin composition of the present invention, adjusting hardness, and improving economic efficiency as an extender, for example. Examples of the inorganic fillers include calcium carbonate, talc, magnesium hydroxide, aluminum hydroxide, mica, clay, natural silicic acid, synthetic silicic acid, titanium oxide, carbon black, barium sulfate, glass balloon, and glass fiber. One type of the inorganic filler may be used singly or two or more types thereof may be used in combination.

When an inorganic filler is contained, the content thereof is preferably to the extent that the properties of the thermoplastic resin composition is not compromised, and is preferably 200 parts by mass or less, more preferably 150 parts by mass or less, still more preferably 100 parts by mass or less, and particularly preferably 50 parts by mass or less with respect to 100 parts by mass of the total of the thermoplastic polyurethane (A) and the acrylic block copolymer (B).

<Antioxidant>

Examples of the antioxidants include hindered phenol-based, phosphorus-based, lactone-based, and hydroxyl-based antioxidants. Among them, a hindered phenol-based antioxidant is preferable. One type of the antioxidant may be used singly or two or more types thereof may be used in combination. When an antioxidant is contained, the content thereof is preferably to the extent that the thermoplastic resin composition is not colored when melt-kneaded, and is preferably within a range from 0.1 to 5 parts by mass with respect to 100 parts by mass of the total of the thermoplastic polyurethane (A) and the acrylic block copolymer (B).

Examples of the other thermoplastic polymers include a polar group-free olefin-based polymer, styrene-based polymer, polyphenylene ether resin, and polyethylene glycol. Among them, when a polar group-free olefin-based polymer is contained in the thermoplastic resin composition of the present invention, the molding processability thereof is further improved. Examples of the polar group-free olefin-based polymer include polyethylene, polypropylene, polybutene, an ethylene/$\alpha$-olefin copolymer obtained by copolymerizing ethylene with an $\alpha$-olefin such as propylene, 1-butene, 1-hexene or 1-octene, a propylene/ethylene copolymer, and a propylene/$\alpha$-olefin copolymer obtained by copolymerizing propylene with an $\alpha$-olefin having 4 or more carbon atoms. Note that in the case of a copolymer of two or more monomers, such as an ethylene/$\alpha$-olefin copolymer, a propylene/ethylene copolymer, or a propylene/$\alpha$-olefin copolymer, the bonding formation of these copolymers is not particularly limited, and may be, for example, a random copolymer or a block copolymer. One type of these thermoplastic polymers may be used singly, or two or more types thereof may be used in combination.

When the other thermoplastic polymer is contained in the thermoplastic resin composition, the content thereof is preferably 100 parts by mass or less, more preferably 50 parts by mass or less, more preferably 20 parts by mass or less, and still more preferably 10 parts by mass or less with respect to 100 parts by mass of the total of the thermoplastic polyurethane (A) and the acrylic block copolymer (B).

Examples of the tackifier resin include rosin-based resins, terpene phenol resins, terpene resins, aromatic hydrocarbon-modified terpene resins, aliphatic petroleum resins, alicyclic petroleum resins, aromatic petroleum resins, coumarone-indene resins, phenolic resins and xylene resins.

The softening point of the tackifier resin is preferably within a range from 85 to 160°C, more preferably from 100 to 150°C, and still more preferably from 105 to 145°C from the point of view of molding processability.

One type of these tackifier resins may be used singly, or two or more types thereof may be used in combination.

When the tackifier resin is contained, the content thereof is preferably to the extent that the mechanical properties of the thermoplastic resin composition are not compromised, and the content thereof is preferably 100 parts by mass or less, more preferably 70 parts by mass or less, still more preferably 30 parts by mass or less, and particularly preferably 10 parts by mass or less with respect to 100 parts by mass of the total of thermoplastic polyurethane (A) and the acrylic block copolymer (B).

There is no particular limitation on the production method of the thermoplastic resin composition of the present invention, and the production method is not particularly limited as long as it is a method enabling to uniformly mix the thermoplastic polyurethane (A), the acrylic block copolymer (B), and other optional components to be added as needed. As the production method, mention may be made of, for example, a method of dissolving the components in a solvent followed by casting and drying the resulting solution; or a method of melt-kneading the components. Among these methods, a melt-kneading method is preferably used from the point of view of enhancing the dispersibility of each constituent component. The melt-kneading can be carried out using, for example, a melt-kneading device such as a single-screw extruder, a twin-screw extruder, a kneader, a batch mixer, a roller, or a Banbury mixer, and the thermoplastic resin composition of the present invention can be obtained by carrying out melt-kneading preferably at 150 to 250°C and under the conditions of a screw rotation speed from 50 to 1000 rpm.

The thermoplastic resin composition of the present invention can be processed into a molded article by a molding method such as extrusion molding, injection molding, hollow molding, compression molding, calendar molding, or vacuum molding.

The thermoplastic resin composition of the present invention is molded into, for example, a sheet or a film, or is multilayer-molded with another sheet or film, and is used for packaging of daily goods, packaging of industrial materials, packaging sheets for foods, and film applications. They can also be widely applied as various molded articles for applications such as hoses, tubes and belts; footwear applications such as sports shoes and fashion sandals; home appliances applications such as televisions, audios, vacuum cleaners, door seals for refrigerators, remote control switches, and mobile phones; office automation equipment applications; automotive applications such as automotive interior and exterior parts applications such as bumper parts, racks and pinion boots, suspension boots, constant velocity joint boots, and body panels; civil engineering and construction applications such as civil engineering sheets, waterproof sheets, window frame sealants, building sealants, various hoses, and knobs; medical supplies such as gaskets of medical syringes, catheter tubes, infusion bags, and adhesive plasters; various grips in scissors, drivers, toothbrushes, ski stocks, for example; stationery such as pen grips; sporting goods such as underwater glasses and snorkels; various packing applications for the purpose of sealability, waterproofness, sound absorption, and vibration insulation, for example, leisure articles, toys, industrial articles, for example, but the molded article are not particularly limited in shapes, structures, and applications, for example. The thermoplastic resin composition of the present invention has improved toughness without compromising the excellent properties of the thermoplastic polyurethane, and can have excellent adhesive force even to a material having high polarity, and thus can be used as a laminated structure having a layer formed of the thermoplastic resin composition of the present invention and a layer formed of another material other than the thermoplastic resin composition.

[Laminated structure]

The laminated structure of the present invention includes a layer formed of the thermoplastic resin composition of the present invention and a layer formed of another material other than the thermoplastic resin composition. The laminated structure of the present invention may be a laminated structure formed by combining and adhering two or more layers of a layer formed of the thermoplastic resin composition and a layer formed of another material other than the thermoplastic resin composition.

The shape of the laminated structure is not particularly limited, and examples thereof include a film-like shape, a sheet-like shape, a tubular shape, for example, and among them, a film-like laminated structure is preferable.

Examples of other materials other than the thermoplastic resin composition include synthetic resins, ceramics, metals, and fabrics.

Examples of the synthetic resin used for the laminated structure of the present invention include polyurethane resins, polyamide resins, polyester resins, polycarbonate resins, polyphenylene sulfide resins, polyacrylate resins, polymethacrylate resins, polyether resins, (meth)acrylonitrile-butadiene-styrene resins, (meth)acrylonitrile-styrene resins, (meth)acrylic acid ester-butadiene-styrene resins, (meth)acrylic acid ester-styrene resins, methyl (meth)acrylate-butadiene-styrene resins, epoxy resins, phenol resins, diallyl phthalate resins, polyimide resins, melamine resins, polyacetal resins, polysulfone resins, polyethersulfone resins, polyetherimide resins, polyphenylene ether resins, polyarylate resins, polyether ether ketone resins, polystyrene resins, rubber-reinforced polystyrene resins, and syndiotactic polystyrene resins. One type of these synthetic resins may be used singly, or two or more types thereof may be used in combination.

Note that as used herein, the term "(meth)acrylonitrile" means "acrylonitrile or methacrylonitrile".

As the other synthetic resin, there are preferably used, for example, polyolefins such as polyethylene, polypropylene, polybutene-1, polyhexene-1, poly-3-methylbutene-1, poly-4-methyl-pentene-1, copolymers of ethylene and one type or two or more types of $\alpha$-olefins with 3 to 20 carbon atoms (such as propylene, 1-butene, 1-pentene, 1-hexene, 1-heptene, 1-octene, 1-decene, 3-methyl-1-butene, 4-methyl-1-pentene, 6-methyl-1-heptene, isooctene, isooctadiene, decadiene, for example), ethylene-propylene-diene copolymers (EPDM), ethylene-vinyl acetate copolymers, and ethylene-acrylic acid copolymers.

The layer formed of the synthetic resin may be further added with an additive, such as a heat stabilizer, a light stabilizer, a UV absorber, an antioxidant, a lubricant, a colorant, an antistatic agent, a flame retardant, a water repellent, a waterproofing agent, a hydrophilicity imparting agent, an electrical conductivity imparting agent, a thermal conductivity imparting agent, an electromagnetic wave shielding agent, a translucency modifier, a fluorescent agent, a sliding agent, a transparency imparting agent, an anti-blocking agent, a metal deactivator, or an antimicrobial, as needed to the extent that the purpose of the present invention is not compromised.

The ceramics to be used in the laminated structure of the present invention mean nonmetallic inorganic materials, and examples thereof include metal oxides, metal carbides, and metal nitrides. Examples thereof include glass, cements, alumina, zirconia, zinc oxide-based ceramics, barium titanate, lead zirconate titanate, silicon carbide, silicon nitride, and ferrites.

Examples of the metal to be used in the laminated structure include iron, copper, aluminum, magnesium, nickel, chromium, zinc, and alloys containing these metals as components. In addition, as the layer formed of a metal, there may be used a layer having a surface formed by plating such as copper plating, nickel plating, chromium plating, tin plating, zinc plating, platinum plating, gold plating, or silver plating.

The texture type of fabric to be used for the laminated structure of the present invention is not particularly limited, and examples thereof include woven fabrics, knitted fabrics, felts, and nonwoven fabrics. The material of the fabric may be a natural fiber, a synthetic fiber, or a mixture made up of natural fibers and synthetic fibers. Examples of the natural fibers include, but are not particularly limited to, one type or two or more types selected from the group consisting of cotton, silk, hemp, and hair.

The synthetic fiber is preferably at least one selected from among polyester fibers, acrylic fibers (polyacrylonitrile), polyurethane fibers, polyamide fibers, polyolefin fibers, and vinylon fibers. Examples of the polyamide fiber include nylon 6 and nylon 66. Examples of the polyolefin fiber include polyethylene fibers and polypropylene fibers.

As other materials other than the thermoplastic resin composition, synthetic resins and metals are preferable from the point of view of further exerting the effect of the present invention of excellent adhesive strength.

The production method of the laminated structure of the present invention is not particularly limited, but the laminated structure is preferably produced by melt lamination molding through which a layer formed of the thermoplastic resin composition of the present invention is layered onto a layer formed of the other material. Examples of the molding methods include injection insert molding method, two-color molding method, extrusion lamination method, co-extrusion molding method, calendar molding method, slush molding method, press molding method, and melt-casting method.

For example, in the case where a laminated structure is produced by an injection insert molding method, an adherend (a layer formed of another material other than the thermoplastic resin composition of the present invention) that has been formed in a predetermined shape and dimension in advance is placed in a mold, and onto which the thermoplastic resin composition of the present invention is injection-molded thereby enabling to produce a laminated structure. In the case where a laminated structure is produced by an extrusion lamination method, the thermoplastic resin composition of the present invention in a molten state is extruded through a die, which has a predetermined shape and is attached to an extruder, and is directly pushed out onto a surface or an edge of an adherend that has been formed in a predetermined shape and dimension in advance, whereby a laminated structure can be produced. In the case where a laminated structure is produced by a co-extrusion molding method, the laminated structure can be produced by using two extruders through which the thermoplastic resin composition of the present invention and another synthetic resin other than the thermoplastic resin composition, which are simultaneously melted, are pushed out. In the case where a laminated structure is produced by a calendar molding method, the thermoplastic resin composition of the present invention, which is melted and rolled by a heating roll and brought into a molten state through several rolls is thermally fused to the surface of an adherend that has been formed in a predetermined shape and dimension in advance, whereby a laminated structure can be produced. In the case where a laminated structure is produced by a press molding method, a molded article made of the thermoplastic resin composition of the present invention has been molded in advance by an injection molding method or an extrusion molding method, and this molded article is heated and pressurized by using a press molding machine, for example, onto an adherend that has been formed into a predetermined shape and size in advance, whereby a laminated structure can be produced. The press molding method is particularly suitable in a case where the adherend is made of ceramic or metal.

As the molding method using melt lamination molding, an injection insert molding method is preferable. The injection molding temperature in the injection insert molding method is not particularly limited, but is preferably 150°C or higher, more preferably 200°C or higher, still more preferably 250°C or higher from the point of view of providing sufficient adhesiveness.

In a case where an adherend is made of a polar resin or a polyolefin resin, the thermoplastic resin composition of the present invention and the adherend are simultaneously melted and subjected to co-extrusion molding or co-injection molding thereby enabling to produce a laminated structure. Alternatively, one layer has been molded in advance, and onto which a component that forms another layer is melt-coated or solution-coated thereby enabling to produce a laminated structure. Otherwise, the laminated structure can also be produced by, for example, two-color molding or insert molding.

The thermoplastic resin composition, molded article, and laminated structure, which are obtained in the present invention, can be widely applied to various applications. For example, a synthetic resin, a synthetic resin containing glass fiber, or a light metal such as aluminum or a magnesium alloy is used in housing materials of electronic or electric devices, office automation equipment, household electric appliances, electric power tools and automobile members, for example, and a laminated structure in which the thermoplastic resin composition of the present invention is adhered to these housing materials can be used. More specifically, the thermoplastic resin composition of the present invention is adhered to the housing of a large display, a notebook type personal computer, a mobile phone, a PHS, a PDA (portable information terminal such as an electronic notebook), an electronic dictionary, a video camera, a digital still camera, a portable audio device and an inverter, for example, and is preferable for an application such as an impact cushioning material, a covering material having an anti-slip function, a waterproof material and a design material.

Moreover, the thermoplastic resin composition of the present invention is useful as a molded article or a structure adhered to glass for a wide range of applications, such as window moldings and gaskets for automobiles and buildings, glass sealing materials, anticorrosive and antiseptic materials. The thermoplastic resin composition of the present invention can also be suitably used as a sealant for, for example, a joint portion between glass and an aluminum sash or a metal opening portion, for example, in a window of an automobile or of a building, or a connection portion between glass and a metal frame in a solar cell module, for example. Furthermore, the thermoplastic resin composition of the present invention can also be suitably used for, for example, various information terminal devices such as notebook personal computers, mobile phones and video cameras, for example, or separators of secondary batteries used for hybrid automobiles and fuel cell automobiles, for example.

The thermoplastic resin composition of the present invention can also be suitably used for various applications such as food packaging materials such as food packaging sheets and cap liners, daily necessities such as toothbrush patterns and cosmetic cases, sports goods such as ski shoes, ski plates, underwater glasses, swimming goggles, golf ball outer skins and core materials, toys, stationery such as pen grips and desk mats, automobile interior parts such as instrument panels, center panels, center console boxes, door trims, pillars, assist grips, steering wheels, knobs, and air back covers, automobile interior and exterior parts such as bumper guards and molds, automobile functional parts such as rack and pinion boots, suspension boots, and constant velocity joint boots, automobile electrical and electronic parts such as curled electrical cord wire coating, various belts, hoses, tubes, and muting gears, civil engineering applications such as civil engineering sheets, waterproof sheets, sealing material for window frame, sealing material for buildings, various hoses and knobs, vacuum cleaner bumpers, door seals for refrigerators, underwater products such as underwater camera covers, household electric appliance applications such as remote controller switches and office automation equipment, audiovisual equipment applications such as connector bobbins and various switches, office automation business equipment applications, various cover parts, various industrial parts with packing for the purpose of sealability, waterproofness, sound absorption and vibration insulation, for example, masks such as dust-protective masks, industrial applications such as transport trays for precision parts and automatic machine robot parts, footwear and clothing applications such as soles and top lifts, textile applications, playground equipment applications, medical applications such as adhesive plasters, and medical equipment applications, for example.

Examples

Hereinafter, the present invention will be described with reference to Examples, but the present invention is not limited to these Examples. Note that in the following Production Examples, monomers and other compounds were used after being dried and purified by a conventional procedure, and degassed with nitrogen. Moreover, the transfer and supply of the monomers and other compounds to the reaction system were carried out under an atmosphere of nitrogen. Note that various physical properties in Examples or Comparative Examples were measured or evaluated by the following procedures.

The components used in Examples and Comparative Examples are as follows.

<Thermoplastic polyurethane (A)>

Thermoplastic polyurethane (A-1): Polyester-based thermoplastic polyurethane *A-1("Elastollan C90A10" manufactured by BASF Japan Ltd.)

Thermoplastic polyurethane (A-2): Polyether-based thermoplastic polyurethane *A-2("Elastollan 1190A50STR" manufactured by BASF Japan Ltd.)

*A-1: Thermoplastic polyurethane containing polyester diol as polymer diol used as raw material of thermoplastic polyurethane

*A-2 Thermoplastic polyurethane containing polyether diol as polymer diol used as raw material of thermoplastic polyurethane

<Acrylic block copolymer (B)>
Acrylic block copolymers (B-1) to (B-6) of Production Examples 1 to 6 set forth below
<Other components>
Acrylic graft copolymer: "FM-40" manufactured by KANEKA CORPORATION

Details of each measurement procedure in Production Examples are as follows.

(1) Measurements of peak top molecular weight (Mp), weight average molecular weight (Mw), number average molecular weight (Mn), and molecular weight distribution (Mw/Mn), for example

The peak top molecular weight (Mp), the weight average molecular weight (Mw), and the number average molecular weight (Mn) of the acrylic block copolymer (B) were determined as the molecular weight in terms of standard polystyrene by GPC (gel permeation chromatography). The molecular weight distribution (Mw/Mn) was calculated from the values of the above-described Mw and Mn. Note that Mp is a value obtained from the peak top position in the chromatogram obtained by GPC measurement. A measurement apparatus and measurement conditions are as follows.

· Apparatus: GPC system "GPC8020" manufactured by Tosoh Corporation
· Separating column: "TSKgel GMHXL", "G4000HXL", and "G5000HXL", manufactured by Tosoh Corporation, were connected in series
· Detector: "RI-8020" manufactured by Tosoh Corporation
· Eluent: tetrahydrofuran
· Eluent flow rate: 1.0 ml/min

· Sample concentration: 5 mg/10 ml
· Column temperature: 40°C

(2) Measurements of contents of polymer blocks in acrylic block copolymer (B)

In the following production examples, the contents of polymer blocks in the acrylic block copolymer (B) were determined by $^1$H-NMR measurement. The measuring equipment and conditions used in $^1$H-NMR measurement are as follows.

· Equipment: nuclear magnetic resonance spectrometer "JNM-ECX 400" manufactured by JEOL Ltd.
· Deuterated solvent: deuterated chloroform

In $^1$H-NMR spectra, the signals around 3.6 ppm and 3.7 ppm are assigned to a hydrogen atom (-O-C$\underline{H}_3$) bonded to the carbon atom adjacent to the oxygen atom contained in the ester group of a structural unit derived from methyl methacrylate and a hydrogen atom (-O-C$\underline{H}_3$) bonded to the carbon atom adjacent to the oxygen atom contained in the ester group of a structural unit derived from methyl acrylate, respectively, the signal around 4.0 ppm is assigned to a hydrogen atom (-O-C$\underline{H}_2$-CH$_2$-CH$_2$-CH$_3$) bonded to the carbon atom adjacent to the oxygen atom contained in an ester group of a structural unit derived from n-butyl acrylate, and the signal around 1.4 ppm is assigned to a hydrogen atom (-O-CH$_2$-(C$\underline{H}_3$)$_3$) of a methyl group contained in the t-butyl group of a structural unit derived from t-butyl acrylate and a hydrogen atom (-O-C$\underline{H}_2$-CH(-CH$_2$-CH$_3$)-CH$_2$-CH$_2$-CH$_2$-CH$_3$) bonded to the carbon atom adjacent to the oxygen atom contained in an ester group of the structural unit derived from 2-ethylhexyl acrylate. The mole ratios of the structural units derived from the monomers were determined from the ratios of the integrated values of these signals, and these mole ratios were then converted into mass ratios based on the molecular weights of the structural units derived from the monomers to determine the contents of the polymer blocks.

(3) Measurement of melt viscosities of thermoplastic polyurethane (A) and acrylic block copolymer (B)

The melt viscosities of the thermoplastic polyurethane (A) and the acrylic block copolymer (B) were measured according to JIS K7199:1999 using a melt viscosity meter ("Capilograph 1C" manufactured by Toyo Seiki Seisaku-sho, Ltd.) set at a cylinder temperature of 210°C under the conditions of a capillary die diameter of 1 mm, a capillary length of 10 mm, a piston speed of 10 mm/min, and a shear rate of 121.6 sec$^{-1}$. The results are shown in Table 2. The values of the ratio of the melt viscosity of the acrylic block copolymer (B) to the melt viscosity of the thermoplastic polyurethanes (A) obtained from these melt viscosity values are also shown in Table 2.

<Acrylic block copolymer (B)>

<<Production Example 1>> (Acrylic block copolymer (B-1))

(1) Into a pressure-resistant container that had been purged with nitrogen and dried, 50.0 kg of toluene and 0.0444 kg of 1,2-dimethoxyethane were added while being stirred at room temperature, subsequently thereto was added 0.383 kg of a toluene solution containing 296 mmol of isobutylbis(2,6-dit-butyl-4-methylphenoxy) aluminum, and was further added 0.0538 kg of a solution of sec-butyllithium containing 98.6 mmol of sec-butyllithium in cyclohexane.
(2) Subsequently, 0.610 kg of methyl methacrylate was added thereto at room temperature under stirring, and stirring was continued for another 60 minutes. The reaction solution was initially colored in yellow, but became colorless after stirring for 60 minutes.
(3) Thereafter, the internal temperature of the polymerization liquid was cooled to -30°C, 7.50 kg of n-butyl acrylate was added dropwise over 4 hours under stirring, and after completion of the dropwise addition, stirring was continued at -30°C for another 5 minutes.
(4) Thereafter, 0.848 kg of methyl methacrylate was added thereto, and the mixture was stirred overnight at room temperature.
(5) The polymerization reaction was terminated by adding 0.240 kg of methanol, and then the obtained reaction solution was poured into methanol under stirring to allow a white precipitate to be deposited. The resultant white precipitate was collected and dried to give an acrylic block copolymer (B-1).

The peak top molecular weight (Mp) and molecular weight distribution (Mw/Mn) of the resultant acrylic block copolymer (B-1) were determined by the above-described GPC measurement. In addition, the total content of PMMA (polymer block composed of 100% by mass of a structural unit derived from methyl methacrylate) as the polymer block (b2) in the acrylic block copolymer (B-1) and the content of the polymer block (b1) were determined by the above-described $^1$H-NMR measurement. The results are shown in Table 1.

<<Production Examples 2 to 5>> (Acrylic block copolymers (B-2) to (B-5))

Each of acrylic block copolymers (B-2) to (B-5) was produced in the same manner as in Production Example 1 except that the addition amounts of toluene, 1,2-dimethoxyethane, isobutylbis(2,6-di-t-butyl-4-methylphenoxy) aluminum, and sec-butyllithium in Step (1), the addition amounts of monomers in Steps (2) and (4), the type and addition amounts of monomers in Step (3), and the addition amount of methanol in Step (5) were changed as shown in Table 1. For the obtained acrylic block copolymers (B-2) to (B-5), Mp, Mw/Mn and the content of each polymer block were determined in the same manner as described above. The results are shown in Table 1.

<<Production Example 6>> (Acrylic block copolymer (B-6))

A precursor of an acrylic block copolymer (B-6) was produced in the same manner as in Production Example 1 except that the addition amounts of toluene, 1,2-dimethoxyethane, isobutylbis(2,6-di-t-butyl-4-methylphenoxy) aluminum, and sec-butyllithium in Step (1), the addition amounts of monomers in Steps (2) and (4), the type and addition amounts of monomers in Step (3), and the addition amount of methanol in Step (5) were changed as shown in Table 1. In the same manner as described above, Mp, Mw/Mn, and the content of each polymer block were determined. The precursor was melt-kneaded under conditions of 250°C and a screw rotation speed of 250rpm in a twin-screw extruder ("ZSK25" manufactured by Coperion GmbH) whereby the t-butyl group was eliminated to give an acrylic block copolymer (B-6). The thermogravimetric measurements of the precursor of the acrylic block copolymer (B-6) and the acrylic block copolymer (B-6) were carried out in accordance with JIS K7120:1987, and the elimination of the t-butyl group was confirmed based on the amount of weight loss at 200 to 250°C. The results are shown in Table 1. It should be noted that the acrylic block copolymer of Production Example 6 possesses a functional group having a strong interaction with the column for GPC measurement and is difficult for an accurate GPC measurement, and hence the GPC measurement was carried out for the block copolymer (precursor) before the elimination of the t-butyl group, and this measurement was regarded as the result of the GPC measurement for the acrylic block copolymer of Production Example 6. In addition, the content of the polymer block of the acrylic block copolymer of Production Example 6 was determined in a way such that the content of each polymer block of the block copolymer (precursor) before elimination of t-butyl group was determined, and from these values was determined the content of each polymer block by calculation based upon an assumption that the occurrence ratio of the elimination of t-butyl group elimination was 100%.

[Table 1]

| | | | Production Example 1 | Production Example 2 | Production Example 3 |
|---|---|---|---|---|---|
| | | | B-1 | B-2 | B-3 |
| Amount used [kg] | Step (1) | Toluene | 50.0 | 50.0 | 46.5 |
| | | 1,2-Dimethoxyethane | 0.0444 | 0.0998 | 0.123 |
| | | Organoaluminium compound (*1) | 0.383 | 0.820 | 1.23 |
| | | sec-Butyllithium | 0.0538 | 0.121 | 0.149 |
| | Step (2) | MMA | 0.610 | 1.47 | 1.8 |
| | Step (3) | nBA | 7.50 | 6.33 | 6.06 |
| | | MA | --- | --- | --- |
| | | 2EHA | --- | --- | --- |
| | | tBA | --- | --- | --- |
| | Step (4) | MMA | 0.848 | 1.20 | 4.14 |

(continued)

|  |  |  | Production Example 1 | Production Example 2 | Production Example 3 |
|---|---|---|---|---|---|
|  |  |  | B-1 | B-2 | B-3 |
|  | Step (5) | Methanol | 0.240 | 0.370 | 0.370 |
| Polymer block(b1) content (% by mass) |  |  | 84 | 70 | 50 |
| Polymer block(b2) content (% by mass) |  |  | 16 | 30 | 50 |
| (b1 - 1)/(b1 - 2) (*2) |  |  | 0/100 | 0/100 | 0/100 |
| Peak top molecular weight (Mp) |  |  | 152,000 | 66,000 | 68,000 |
| Molecular weight distribution (Mw/Mn) |  |  | 1.22 | 1.17 | 1.13 |
| Formation of acrylic block copolymer(B) (*3) |  |  | MMA-nBA-MMA | MMA-nBA-MMA | MMA-nBA-MMA |
|  |  |  | Production | Production | Production |
|  |  |  | Example 4 | Example 5 | Example 6 |
|  |  |  | B-4 | B-5 | B-6 |
| Amount used [kg] | Step (1) | Toluene | 50.2 | 50.0 | 50.8 |
|  |  | 1,2-Dimethoxyethane | 0.0780 | 0.0907 | 0.0970 |
|  |  | Organoaluminium compound (*1) | 0.641 | 0.746 | 0.990 |
|  |  | sec-Butyllithium | 0.0946 | 0.110 | 0.121 |
|  | Step (2) | MMA | 1.07 | 0.886 | 1.87 |
|  | Step (3) | nBA | 5.12 | 3.57 | 5.85 |
|  |  | MA | 1.28 | --- | --- |
|  |  | 2EHA | --- | 3.57 | --- |
|  |  | tBA | --- | --- | 0.65 |
|  | Step (4) | MMA | 1.52 | 0.968 | 463 |
|  | Step (5) | Methanol | 0.289 | 0.339 | 0.440 |
| Polymer block(b1) content (% by mass) |  |  | 71 | 80 | 50 |
| Polymer block(b2) content (% by mass) |  |  | 29 | 20 | 50 |
| (b1 - 1)/(b1 - 2) (*2) |  |  | 20/80 | 0/100 | 0/100 |
| Peak top molecular weight (Mp) |  |  | 82,000 | 73,000 | 69,000 |
| Molecular weight distribution (Mw/Mn) |  |  | 1.10 | 1.25 | 1.18 |
| Formation of acrylic block copolymer(B) (*3) |  |  | MMA-(nBA/-MA)-MMA | MMA-(nBA/2E-HA)-MMA | MMA-(n-BA/AA)-MMA |

Note that the notations in Table 1 are as follows.

MMA: methyl methacrylate
MA: methyl acrylate
nBA: n-butyl acrylate
2EHA: 2-ethylhexyl acrylate

tBA: t-butyl acrylate

AA: acrylic acid

Organoaluminum compound (*1): isobutylbis(2,6-di-t-butyl-4-methylphenoxy) aluminum

(*2): (b1-1)/(b1-2) denotes the content (% by mass) of the structural unit derived from the acrylic acid ester (b1-1) having an organic group with 1 to 3 carbon atoms/the content (% by mass) of the structural unit derived from the acrylic acid ester (b1-2) having an organic group with 4 to 12 carbon atoms in the polymer block (b1).

(*3): MMA-nBA-MMA denotes a triblock copolymer of a methyl methacrylate polymer block-(n-butyl acrylate)polymer block-methyl methacrylate polymer block. MMA-(nBA/2EHA)-MMA denotes a triblock copolymer of a methyl methacrylate polymer block-(n-butyl acrylate/2-ethylhexyl acrylate)copolymer block-methyl methacrylate polymer block. MMA-(nBA/MA)-MMA denotes a triblock copolymer of a methyl methacrylate polymer block-(n-butyl acrylate/methyl acrylate)copolymer block-methyl methacrylate polymer block.

[Table 2]

| | | Production Example 1 | Production Example 2 | Production Example 3 | Production Example 4 | Production Example 5 | Production Example 6 | Acrylic graft copolymer | TPU | |
|---|---|---|---|---|---|---|---|---|---|---|
| | | B-1 | B-2 | B-3 | B-4 | B-5 | B-6 | FM-40 | A-1 | A-2 |
| Melt viscosity $\eta$ (Pa · s) | 210°C, 121.6 sec[1] | 360 | 120 | 940 | 140 | 120 | 1100 | 4700 | 930 | 790 |
| Melt viscosity ratio $(\eta_B)/(\eta_{A1})$ | 210°C | 0.39 | 0.13 | 1.0 | 0.15 | 0.13 | 1.2 | 5.1 | --- | --- |
| Melt viscosity ratio $(\eta_B)/(\eta_{A2})$ | 210°C | 0.46 | 0.15 | 1.2 | 0.18 | 0.15 | 1.4 | 5.9 | --- | --- |

[Examples 1 to 11, Comparative Examples 1 to 4, and Reference Example 1]

<Preparation of thermoplastic resin composition>

The components shown in Table 3 were preliminary mixed according to the ratios shown in Table 3. The mixture obtained by this preliminary mixing was melt-kneaded under the conditions of 210°C and a screw rotation speed of 250 rpm in a twin-screw extruder ("ZSK 25" manufactured by Coperion GmbH) to give a thermoplastic resin composition. The below-mentioned physical properties were measured for the resultant thermoplastic resin composition. The results are shown in Tables 3 and 4.

(1) Hardness

(1-1) Preparation of sheet of thermoplastic resin composition

The thermoplastic resin composition obtained in each of Examples and Comparative Examples was injection-molded with an injection molding machine ("SE18DU" manufactured by Sumitomo Heavy Industries, Ltd.) set at a cylinder temperature of 210°C and a mold temperature of 40°C to prepare a sheet having a length of 50 mm, a width of 50 mm, and a thickness of 3 mm.

(1-2) Measurement of hardness

Three sheets of the thermoplastic resin composition obtained above were laid on top of another to prepare a test piece having a thickness of 9 mm, and the hardness of this test piece was measured with an indenter of a type A durometer in accordance with JIS K6253-3:2012.

(2) Tensile strength at break, tensile strain at break and S-S curve area

The thermoplastic resin composition obtained in each of Examples and Comparative Examples was injection-molded with an injection molding machine ("SE18DU" manufactured by Sumitomo Heavy Industries, Ltd.) set at a cylinder temperature of 210°C and a mold temperature of 40°C to give a dumbbell No. 5 specimen in accordance with JIS K6251:2010. According to JIS K6251:2010, a tensile test of the obtained dumbbell No. 5 specimen was carried out under the condition of a tensile speed of 500 mm/min by using "Instron 5566" manufactured by Instron to measure the tensile strength at break and the tensile strain at break. The S-S curve area obtained together was determined. The larger the S-S curve area indicates the higher the energy required to rupture, and the better the toughness.

(3) MFR

The thermoplastic resin composition obtained in each of Examples and Comparative Examples was measured under conditions of 190°C, a load of 2.16 kg, and 10 minutes in accordance with JIS K7210-4:2011.

(4) Outer appearance at high temperature molding

The thermoplastic resin composition obtained in each of Examples and Comparative Examples was injection-molded with an injection molding machine ("SE100DV" manufactured by Sumitomo Heavy Industries, Ltd.) set at a cylinder temperature of 260°C and a mold temperature of 40°C to give a sheet having a length of 150 mm, a width of 100 mm, and a thickness of 1 mm. The outer appearance of the resultant sheet was visually observed and evaluated according to the following criteria. The results are shown in Table 3.

    A: Outer appearance is good and there is no problem in practical use
    B: Poor in outer appearance (fish-eyes) and not suitable for practical use

(5) Melt tension

The measurement of the thermoplastic resin composition obtained in each of Examples and Comparative Examples was carried out by using a melt viscosity meter ("Capilograph 1D" manufactured by Toyo Seiki Seisaku-sho, Ltd.) set at a cylinder temperature of 200°C under the conditions of a capillary die diameter of 1 mm, a capillary length of 20 mm, a piston speed of 10 mm/min and a take-off speed of 10 m/min to evaluate the melt tension of the thermoplastic resin layer. The test was carried out three times in total, and the obtained average value was taken as the melt tension.

(6) Taber wear

The thermoplastic resin composition obtained in each of Examples and Comparative Examples was injection-molded by an injection molding machine ("SE100DV" manufactured by Sumitomo Heavy Industries, Ltd.) set at a cylinder temperature of 210°C and a mold temperature of 40°C to give a sheet having a length of 150 mm, a width of 100 mm, and a thickness of 2 mm. The resultant sheet was cut into a test sheet having a length of 100 mm, a width of 100 mm, and a thickness of 2 mm. According to JIS K7204:1999, Taber abrasion test was carried out for the obtained test sheet under the conditions of an abrasive wheel of H22, a load of 1000kgf, and 1000 rotations using "Taber type Abrasion Tester" manufactured by Toyo Seiki Seisaku-sho, Ltd, and the weight loss of the obtained test sheet due to Taber abrasion test was measured. The results are shown in Table 4.

[Table 3]

Table 3

| | | Example 1 | Example 2 | Example 3 | Example 4 | Example 5 |
|---|---|---|---|---|---|---|
| Thermoplastic polyurethane (A) | A-1 | 95 | 90 | 85 | 80 | 90 |
| | A-2 | | | | | |
| Acrylic block copolymer (B) | B-1 | 5 | 10 | 15 | 20 | |
| | B-2 | | | | | 10 |
| | B-3 | | | | | |
| | B-4 | | | | | |
| | B-5 | | | | | |
| | B-6 | | | | | |
| Acrylic graft copolymer | FM-40 | | | | | |
| Type A Hardness | Immediate value | 87 | 85 | 84 | 84 | 85 |
| | 15 seconds value | 86 | 83 | 81 | 81 | 83 |
| Tensile strength at break | (MPa) | 28 | 29 | 30 | 31 | 30 |
| Tensile strain at break | (%) | 520 | 500 | 520 | 490 | 510 |
| S-S curve area (Ratio to Comparative Example 1) | Times | 1.26 | 1.14 | 1.20 | 1.04 | 1.14 |
| S-S curve area (Ratio to Comparative Example 4) | Times | --- | --- | --- | --- | --- |
| MFR | 190°C, 2.16 kgf (g/10 min) | 16 | 15 | 12 | 7.4 | 16 |
| Outer appearance at high temperature molding | | A | A | A | A | A |

Table 3 (continued)

| | | Example 6 | Example 7 | Example 8 | Example 9 | Example 10 | Example 11 |
|---|---|---|---|---|---|---|---|
| Thermoplastic polyurethane (A) | A-1 | 90 | 95 | 90 | 80 | 90 | |
| | A-2 | | | | | | 90 |

(continued)

| | | Example 6 | Example 7 | Example 8 | Example 9 | Example 10 | Example 11 |
|---|---|---|---|---|---|---|---|
| Acrylic block copolymer (B) | B-1 | | | | | | 10 |
| | B-2 | | | | | | |
| | B-3 | 10 | | | | | |
| | B-4 | | 5 | 10 | 20 | | |
| | B-5 | | | | | 10 | |
| | B-6 | | | | | | |
| Acrylic graft copolymer | FM-40 | | | | | | |
| Type A Hardness | Immediate value | 90 | 87 | 86 | 84 | 86 | 86 |
| | 15 seconds value | 89 | 85 | 84 | 79 | 83 | 84 |
| Tensile strength at break | (MPa) | 26 | 30 | 31 | 30 | 27 | 28 |
| Tensile strain at break | (%) | 500 | 490 | 460 | 450 | 500 | 540 |
| S-S curve area (Ratio to Comparative Example 1) | Times | 1.03 | 1.32 | 1.25 | 1.16 | 1.05 | --- |
| S-S curve area (Ratio to Comparative Example 4) | Times | --- | --- | --- | --- | --- | 1.05 |
| MFR | 190°C, 2.16 kgf (g/10 min) | 15 | 7.4 | 7.0 | 6.4 | 16 | 20 |
| Outer appearance at high temperature molding | | A | A | A | A | A | A |

Table 3 (continued)

| | | Comparative Example 1 | Comparative Example 2 | Comparative Example 3 | Comparative Example 4 | Reference Example 1 |
|---|---|---|---|---|---|---|
| Thermoplastic polyurethane (A) | A-1 | 100 | 70 | 90 | | 90 |
| | A-2 | | | | 100 | |
| Acrylic block copolymer (B) | B-1 | | 30 | | | |
| | B-2 | | | | | |
| | B-3 | | | | | |
| | B-4 | | | | | |
| | B-5 | | | | | |
| | B-6 | | | | | 10 |
| Acrylic graft copolymer | FM-40 | | | 10 | | |
| Type A Hardness | Immediate value | 90 | 84 | 88 | 88 | 90 |
| | 15 seconds value | 88 | 80 | 85 | 87 | 89 |
| Tensile strength at break | (MPa) | 26 | 28 | 26 | 27 | 26 |

(continued)

| | | Comparative Example 1 | Comparative Example 2 | Comparative Example 3 | Comparative Example 4 | Reference Example 1 |
|---|---|---|---|---|---|---|
| Tensile strain at break | (%) | 490 | 440 | 490 | 530 | 420 |
| S-S curve area (Ratio to Comparative Example 1) | Times | 1.00 | 0.87 | 0.95 | --- | 0.85 |
| S-S curve area (Ratio to Comparative Example 4) | Times | --- | --- | --- | 1.00 | --- |
| MFR | 190°C, 2.16 kgf (g/10 min) | 17 | 6.9 | 13 | 26 | 11 |
| Outer appearance at high temperature molding | | A | A | A | A | B |

The results of Examples and Comparative Examples are summarized in Table 3.

As compared with Comparative Examples 1 and 4 in which the acrylic block copolymer (B) was not contained, Examples 1 to 11 had a large S-S curve area and were excellent in toughness.

Comparative Example 2, in which the content of the acrylic block copolymer (B) was above the range of the present invention, had small tensile strain at break and S-S curve area and reduced toughness.

Comparative Example 3, in which the acrylic block copolymer (B) was not contained but instead the acrylic graft copolymer "FM-40" was contained, had an S-S curve area further smaller than that in Comparative Example 1, and rather decreased toughness.

Reference Example 1, in which the acrylic block copolymer (B) contained a functional group, had small tensile strain at break and S-S curve area and reduced toughness, and furthermore outer appearance defects occurred at high-temperature molding.

In particular, Examples 7 and 8 containing 5 to 10 parts by mass of the acrylic block copolymer (B-4) containing a structural unit derived from the acrylic acid ester (b1-1) (methyl acrylate) as the polymer block (b1) had a large S-S curve area and particularly favorable toughness.

[Table 4]

| | | Example 2 | Example 6 | Example 8 | Comparative Example 1 | Comparative Example 2 | Comparative Example 3 |
|---|---|---|---|---|---|---|---|
| Thermoplastic polyurethane (A) | A-1 | 90 | 90 | 90 | 100 | 70 | 90 |
| Acrylic block copolymer (B) | B-1 | 10 | | | | 30 | |
| | B-3 | | 10 | | | | |
| | B-4 | | | 10 | | | |
| Acrylic graft copolymer | FM-40 | | | | | | 10 |
| Melt tension | 200°C (mN) | 2.4 | 3.3 | 3.6 | 1.5 | 8.9 | 1.7 |
| Taber abrasion | (mg) | 4.5 | 6.6 | 4.1 | 4.4 | 98 | 4.3 |

## EP 4 491 671 A1

The results of the melt tension measurement and the Taber abrasion test are summarized in Table 4.

Examples 2, 6, and 8 shown in Table 4 each had a melt tension higher than that in Comparative Example 1, and an excellent moldability. They also exhibited an excellent abrasion resistance in the Taber abrasion test.

Comparative Example 2, in which the content of the acrylic block copolymer (B) is above the range of the present invention, had a melt tension higher than that in Comparative Example 1, but a large abrasion loss in the Taber abrasion test, and thus is not suitable for practical use.

Comparative Example 3, in which the acrylic block copolymer (B) was not contained but instead the acrylic graft copolymer "FM-40" was contained, had a melt tension and Taber abrasion for which no changes were observed as compared with those in Comparative Example 1.

Industrial Applicability

The thermoplastic resin composition obtained in the present invention is excellent in toughness and moldability evaluated by melt tension without significantly compromising excellent mechanical properties of the thermoplastic polyurethane such as tensile strength at break, tensile strain at break, and abrasion resistance. Therefore, the thermoplastic resin composition containing the thermoplastic polyurethane of the present invention, a molded article prepared from the thermoplastic resin composition and a laminated structure are useful for various applications.

## Claims

1. A thermoplastic resin composition comprising a thermoplastic polyurethane (A) and an acrylic block copolymer (B) that contains an acrylic acid ester polymer block (b1) and a methacrylic acid ester polymer block (b2), wherein a content of the thermoplastic polyurethane (A) is more than 75 parts by mass and 99 parts by mass or less with respect to 100 parts by mass of a total of the thermoplastic polyurethane (A) and the acrylic block copolymer (B).

2. The thermoplastic resin composition according to claim 1, wherein a ratio $\eta_B/\eta_A$ of a melt viscosity $\eta_B$ of the acrylic block copolymer (B) to a melt viscosity $\eta_A$ of the thermoplastic polyurethane (A) determined by melt viscosity measurement (at measurement temperature of 210°C, shear rate of 121.6 sec$^{-1}$) defined in JIS K 7199:1999 is within a range from 0.10 to 10.

3. The thermoplastic resin composition according to claim 1 or 2,

   wherein a polymer diol used as a raw material of the thermoplastic polyurethane (A) comprises
   at least one selected from the group consisting of a polyester diol and a polyether diol.

4. The thermoplastic resin composition according to any one of claims 1 to 3, wherein the acrylic block copolymer (B) has a peak top molecular weight within a range of 40,000 or more and 300,000 or less.

5. The thermoplastic resin composition according to any one of claims 1 to 4, wherein the acrylic block copolymer (B) is a triblock copolymer in which the methacrylic acid ester polymer block (b2) is bonded to each end of the acrylic acid ester polymer block (b1).

6. The thermoplastic resin composition according to any one of claims 1 to 5, wherein a content of the methacrylic acid ester polymer block (b2) in the acrylic block copolymer (B) is within a range from 1 to 52% by mass.

7. The thermoplastic resin composition according to any one of claims 1 to 6, wherein the acrylic acid ester polymer block (b1) contains 1% by mass or more and 100% by mass or less of a structural unit derived from the acrylic acid ester (b1-1) having an organic group with 1 to 3 carbon atoms.

8. The thermoplastic resin composition according to claim 7, wherein the acrylic acid ester (b1-1) is methyl acrylate.

9. A molded article comprising the thermoplastic resin composition according to any one of claims 1 to 8.

10. A laminated structure comprising a layer formed of the thermoplastic resin composition according to any one of claims 1 to 8 and a layer formed of another material other than the thermoplastic resin composition.

## INTERNATIONAL SEARCH REPORT

International application No.

**PCT/JP2023/007964**

### A. CLASSIFICATION OF SUBJECT MATTER

*C08L 75/04*(2006.01)i; *B32B 27/40*(2006.01)i; *C08F 297/02*(2006.01)i; *C08L 53/00*(2006.01)i
FI:   C08L75/04; C08L53/00; C08F297/02; B32B27/40

According to International Patent Classification (IPC) or to both national classification and IPC

### B. FIELDS SEARCHED

Minimum documentation searched (classification system followed by classification symbols)

C08L75/04; B32B27/40; C08F297/02; C08L53/00; C09D175/04; C09J175/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2009/004939 A1 (KANEKA CORPORATION) 08 January 2009 (2009-01-08) claims, paragraphs [0002], [0021]-[0024], [0079]-[0080], [0094]-[0114] | 1-10 |
| A | JP 2009-79119 A (KANEKA CORPORATION) 16 April 2009 (2009-04-16) paragraphs [0177]-[0185] | 1-10 |
| A | WO 2015/098549 A1 (THE YOKOHAMA RUBBER CO., LTD.) 02 July 2015 (2015-07-02) entire text | 1-10 |
| A | JP 2000-143932 A (KURARAY CO LTD) 26 May 2000 (2000-05-26) entire text | 1-10 |
| A | JP 2018-184542 A (ARON KASEI KK) 22 November 2018 (2018-11-22) entire text | 1-10 |
| A | JP 2021-80442 A (KURARAY CO LTD) 27 May 2021 (2021-05-27) entire text | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/007964**

| Patent document cited in search report | | | Publication date (day/month/year) | Patent family member(s) | | | Publication date (day/month/year) |
|---|---|---|---|---|---|---|---|
| WO | 2009/004939 | A1 | 08 January 2009 | (Family: none) | | | |
| JP | 2009-79119 | A | 16 April 2009 | (Family: none) | | | |
| WO | 2015/098549 | A1 | 02 July 2015 | KR | 10-2016-0102986 | A | |
| | | | | CN | 106029702 | A | |
| | | | | TW | 201529693 | A | |
| JP | 2000-143932 | A | 26 May 2000 | (Family: none) | | | |
| JP | 2018-184542 | A | 22 November 2018 | (Family: none) | | | |
| JP | 2021-80442 | A | 27 May 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009004939 A
- JP H0693060 A
- JP H05507737 A
- JP H11335432 A
- JP 2019157067 A

**Non-patent literature cited in the description**

- POLYMER HANDBOOK. Wiley Interscience, Inc., 1999, vol. 7, 675-714
- *Polymer Engineering and Science*, 1974, vol. 14, 147-154
- *Macromolecular Chemistry and Physics*, 2000, vol. 201, 1108-1114
- **G.I.TAYLOR**. *Proc. R. Soc. London*, 1932, vol. A138, 41
- **G.I.TAYLOR**. *Proc. R. Soc. London*, 1934, vol. A146, 501
- **S. WU**. *Polym. Eng. Sci.*, 1987, vol. 27, 335